(19) Europäisches Patentamt
European Patent Office
Office européen des brevets

(11) **EP 4 258 221 A2**

(12) **EUROPEAN PATENT APPLICATION**

(43) Date of publication:
**11.10.2023 Bulletin 2023/41**

(21) Application number: **23155781.0**

(22) Date of filing: **09.02.2023**

(51) International Patent Classification (IPC):
***G06T 15/60*** *(2006.01)*

(52) Cooperative Patent Classification (CPC):
**G06T 15/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.04.2022 JP 2022062867**

(71) Applicant: **CANON KABUSHIKI KAISHA**
**Tokyo 146-8501 (JP)**

(72) Inventor: **SHEN, Yangtai**
**Tokyo, 146-8501 (JP)**

(74) Representative: **TBK**
**Bavariaring 4-6**
**80336 München (DE)**

(54) **IMAGE PROCESSING APPARATUS, IMAGE PROCESSING METHOD, AND PROGRAM**

(57) An image processing apparatus(100) has one or more memories(412,414) storing instructions; and one or more processors(411) executing the instructions to: acquire a foreground object image, the foreground object image being an image viewing a foreground object from a virtual viewpoint and including no background(104); acquire a background image rendered using computer graphics, the background image being an image viewing a CG space from the virtual viewpoint and including background(108); generate a shadow image indicating a shadow of the foreground object corresponding to the CG space(107); and generate a combined image by combining the foreground object image, the background image, and the shadow image into a single image(109), wherein the shadow image is generated based on two-dimensional information on a shape of the foreground object and information on a light in the CG space(S501-S503).

FIG.2A

FIG.2B

**Description**

BACKGROUND OF THE DISCLOSURE

Field of the Disclosure

The present disclosure relates to generation of data based on captured images.

Description of the Related Art

There is a method of generating three-dimensional shape data (also referred to as a three-dimensional model) indicating a three-dimensional shape of a foreground object by a group of elements such as voxels based on a plurality of captured images obtained by capturing the foreground object from a plurality of viewpoints while maintaining time synchronization. There is also a method of combining the three-dimensional model of the foreground object with a three-dimensional space generated by the use of computer graphics. A realistic combined image can be generated by further combining a shadow.

International Publication No. WO 2019/031259 discloses that a shadow of an object is generated based on a three-dimensional model of a foreground object and light source information on a projection space to which the three-dimensional model is projected.

In the method of generating a shadow directly using a three-dimensional model of a foreground object like International Publication No. WO 2019/031259, positional information on each element of the three-dimensional model is three-dimensional information. Thus, the amount of data used to generate a shadow becomes large, which causes an increase in the amount of computation in shadow generation.

SUMMARY OF THE DISCLOSURE

The present invention in its first aspect provides an image processing apparatus as specified in claims 1 to 13.

The present invention in its second aspect provides an image processing method as specified in claim 14.

The present invention in its third aspect provides program as specified in claim 15.

Further features of the present disclosure will become apparent from the following description of exemplary embodiments with reference to the attached drawings.

BRIEF DESCRIPTION OF THE DRAWINGS

FIG. 1 is a functional configuration diagram of an image processing apparatus;

FIGS. 2A and 2B are diagrams for illustrating the arrangement of image capturing apparatuses and silhouette images;

FIGS. 3A to 3E are diagrams showing an example of a combined image and intermediate data for generating the combined image;

FIG. 4 is a hardware configuration diagram of the image processing apparatus;

FIG. 5 is a flowchart for illustrating generation of a shadow image;

FIG. 6 is a diagram for illustrating generation of a shadow image;

FIG. 7 is a flowchart for illustrating generation of a combined image;

FIG. 8 is a functional configuration diagram of an image processing apparatus;

FIG. 9 is a flowchart for illustrating generation of a shadow image;

FIGS. 10A and 10B are diagrams for illustrating the arrangement of image capturing apparatuses and a depth image of a foreground object;

FIG. 11 is a functional configuration diagram of an image processing apparatus;

FIGS. 12A and 12B are diagrams for illustrating posture information; and

FIG. 13 is a flowchart for illustrating generation of a combined image.

DESCRIPTION OF THE EMBODIMENTS

Embodiments of the technique of the present disclosure will be hereinafter described with reference to the drawings. It should be noted that the following embodiments do not limit the technique of the present disclosure and not all combinations of features described in the following embodiments are necessarily essential for solving means of the technique of the present disclosure. The same constituent is described with the same reference sign. Terms denoted by reference signs consisting of the same number followed by different letters indicate different instances of an apparatus having the same function.

<First Embodiment>

[System Configuration]

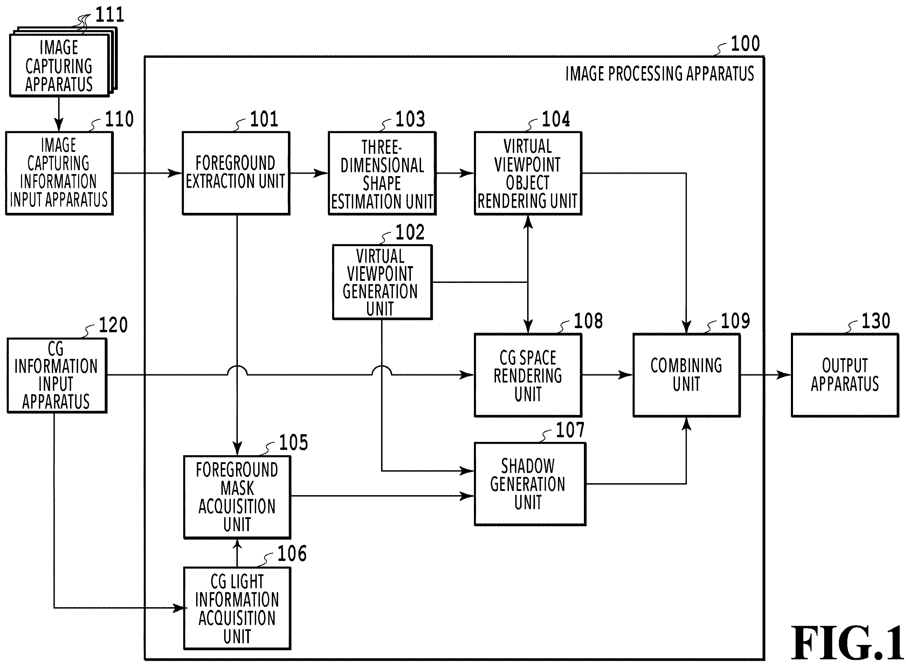

FIG. 1 is a diagram showing an example of a system for generating a combined image by combining a no background image of a foreground object viewed from a virtual viewpoint with a CG image. The system comprises an image capturing apparatus 111, an image capturing information input apparatus 110, a CG information input apparatus 120, an image processing apparatus 100, and an output apparatus 130.

The image capturing apparatus 111 is constituted of a plurality of image capturing apparatuses. Each of the image capturing apparatuses is an apparatus such as a digital video camera capturing an image such as a moving image. All of the image capturing apparatuses constituting the image capturing apparatus 111 capture images while maintaining time synchronization. The image capturing apparatus 111 captures an object present in a captured space from multiple directions at various angles and outputs the resulting images to the image capturing information input apparatus 110.

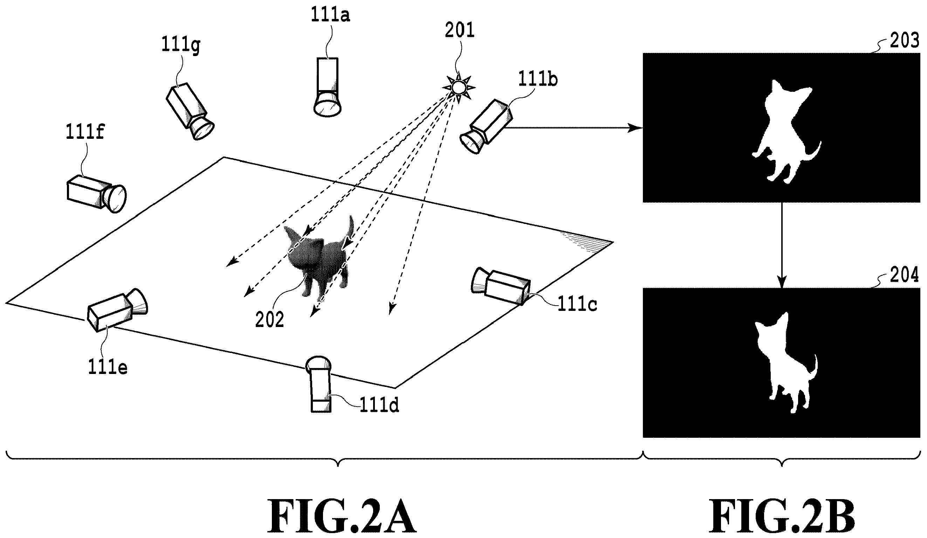

FIG. 2A is a diagram for illustrating the arrangement of the image capturing apparatus 111 and the like. Image capturing apparatuses 111a to 111g in FIG. 2A are an example of the plurality of image capturing apparatuses constituting the image capturing apparatus 111. As shown in FIG. 2A, for example, the image capturing apparatuses 111a to 111g are arranged in a studio and capture a foreground object 202 at various angles while maintaining time synchronization. An object to be captured by the image capturing apparatus 111 is referred to as a foreground object. For example, the foreground object is a human figure. Alternatively, the foreground object may be an animal or a substance whose image pattern is predetermined, such as a ball or a goal.

The image capturing information input apparatus 110 outputs, to the image processing apparatus 100, a plurality of captured images obtained by the image capturing apparatus 111 capturing the foreground object from different viewpoints and viewpoint information such as a position, orientation, and angle of view of the image capturing apparatus 111. For example, the viewpoint information on the image capturing apparatus includes an external parameter, internal parameter, lens distortion, or focal length of the image capturing apparatus 111. The captured images and the viewpoint information on the image capturing apparatus may be directly output from the image capturing apparatus 111 to the image processing apparatus 100. Alternatively, the captured images may be output from another storage apparatus.

The CG information input apparatus 120 outputs, from a storage unit, numerical three-dimensional information such as a position, shape, material, animation, and effect of a background object in a three-dimensional space to be a background in a combined image, and information on a light in the three-dimensional space. The CG information input apparatus 120 also outputs a program to control the three-dimensional information from the storage unit. The three-dimensional space to be a background is generated by the use of common computer graphics (CG). In the present embodiment, the three-dimensional space to be a background generated by the use of CG is also referred to as a CG space.

The image processing apparatus 100 generates a three-dimensional model (three-dimensional shape data) indicating a three-dimensional shape of the foreground object based on the plurality of captured images obtained by capturing from different viewpoints. An image of the foreground object viewed from a virtual viewpoint which is different from the viewpoints of the actual image capturing apparatuses is generated by rendering using the generated three-dimensional model.

The image processing apparatus 100 also generates a combined image by combining an image of the CG space viewed from a virtual viewpoint with an image of the foreground object viewed from the same virtual viewpoint. By combining the images, the stage effects on the foreground object image can be improved and the image can be more fascinating. Incidentally, the combined image may be either a moving image or a still image. The configuration of the image processing apparatus 100 will be described later.

The output apparatus 130 outputs the combined image generated by a combining unit 109 and displays it on a display apparatus such as a display. The combined image may transmitted to a storage apparatus such as a server. Incidentally, the system may be constituted of either a plurality of apparatuses as shown in FIG. 1 or a single apparatus.

[Functional Configuration of Image Processing Apparatus]

Next, the functional configuration of the image processing apparatus 100 will be described with reference to FIG. 1. The image processing apparatus 100 comprises a foreground extraction unit 101, a three-dimensional shape estimation unit 103, a virtual viewpoint generation unit 102, a virtual viewpoint object rendering unit 104, a CG space rendering unit 108, a CG light information acquisition unit 106, a foreground mask acquisition unit 105, a shadow generation unit 107, and the combining unit 109.

The foreground extraction unit 101 acquires a captured image from the image capturing information input apparatus 110. The foreground extraction unit 101 then extracts an area in which the foreground object is present from the captured image, and generates and outputs a silhouette image indicating the area of the foreground object.

A silhouette image 203 shown in FIG. 2B is an example of a silhouette image generated based on an image captured by the image capturing apparatus 111b capturing the foreground object 202. As shown in FIG. 2B, the silhouette image is output as a binary image in which a foreground area, which is the area of the foreground object, is shown in white and a non-foreground area other than the foreground area is shown in black. The silhouette image is also referred to as a masking image. The silhouette image of the foreground object is thus obtained as two-dimensional intermediate information for generating an image of the foreground object viewed from a virtual viewpoint.

The method of extracting the foreground area is not limited since any existing technique can be used. For example, the method may be a method of calculating a difference between a captured image and an image obtained by capturing the captured space without the foreground object and extracting an area in which the difference is higher than a threshold as a foreground area in which the foreground object is present. Alternatively, the foreground area may be extracted by the use of a deep neural network.

The three-dimensional shape estimation unit 103 is a generation unit which generates a three-dimensional model of the foreground object. The three-dimensional shape estimation unit 103 generates a three-dimensional model by estimating a three-dimensional shape of the foreground object using the captured images, viewpoint information on the image capturing apparatus 111, and silhouette images generated by the foreground extraction unit 101. In the description of the present embodiment, it is assumed that a group of elements indicating the three-dimensional shape is a group of voxels, which are small cuboids. The method of estimating the three-dimensional shape is not limited; any existing technique can be used to estimate the three-dimensional shape of the foreground object.

For example, the three-dimensional shape estimation unit 103 may use the visual hull to estimate the three-dimensional shape of the foreground object. In the visual hull, foreground areas in silhouette images corresponding to the respective image capturing apparatuses constituting the image capturing apparatus 111 are back-projected to the three-dimensional space. By calculating a portion of intersection of visual volumes derived from the respective foreground areas, the three-dimensional shape of the foreground object is obtained. Alternatively, the method may be the stereo method of calculating distances from the image capturing apparatuses to the foreground object by the triangulation principle and estimating the three-dimensional shape.

The virtual viewpoint generation unit 102 generates, as information on a virtual viewpoint to render an image viewed from the virtual viewpoint, viewpoint information on the virtual viewpoint such as a position of the virtual viewpoint, a line of sight at the virtual viewpoint, and an angle of view. In the present embodiment, the virtual viewpoint may be described as a virtual camera (virtual camera). In this case, the position of the virtual viewpoint corresponds to a position of the virtual camera, and the line of sight from the virtual viewpoint to an orientation of the virtual camera.

The virtual viewpoint object rendering unit 104 renders the three-dimensional model of the foreground object to obtain an image of the foreground object viewed from the virtual viewpoint set by the virtual viewpoint generation unit 102. As a result of rendering by the virtual viewpoint object rendering unit 104, a texture image of the foreground object viewed from the virtual viewpoint is obtained.

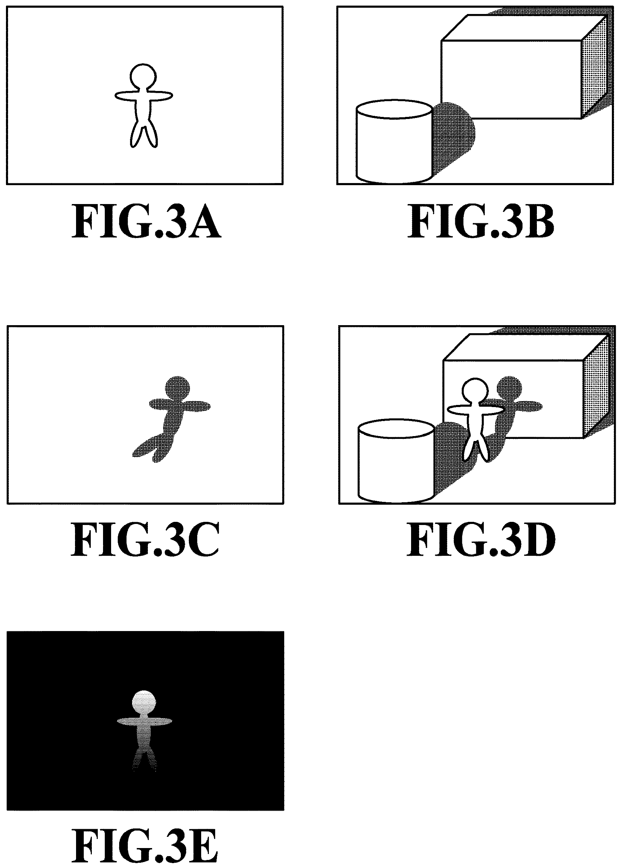

FIGS. 3A to 3E are diagrams for illustrating the images generated by the image processing apparatus 100. FIG. 3A is a diagram showing the texture image of the foreground object viewed from the virtual viewpoint. The texture image of the foreground object viewed from the virtual viewpoint may also be referred to as a virtual viewpoint image or a foreground object image.

As a result of rendering by the virtual viewpoint object rendering unit 104, depth information indicating a distance from the virtual viewpoint to the foreground object is also obtained. The depth information expressed as an image is referred to as a depth image.

FIG. 3E is a diagram showing a depth image corresponding to the texture image of FIG. 3A. The depth image is an image in which a pixel value of each pixel is a depth value indicating a distance from a camera. The depth image of FIG. 3E is a depth image indicating a distance from the virtual viewpoint. In the depth image, a pixel value of an area with no foreground is 0. In FIG. 3E, an area with a pixel value of 0 is shown in black. In FIG. 3E, a gray area indicates an area with a depth value other than 0, where the depth value increases as the gray becomes darker. With the increase in the depth value, a position of the object indicated by the corresponding pixel becomes away from the camera (virtual viewpoint). In this manner, in the course of generating an image of the foreground object viewed from the virtual viewpoint, the depth information (depth image) on the foreground object is obtained as two-dimensional intermediate information.

The CG space rendering unit 108 renders the CG space output from the CG information input apparatus 120 to obtain an image viewed from a virtual viewpoint. The virtual viewpoint of the CG space is a viewpoint corresponding to the virtual viewpoint set by the virtual viewpoint generation unit 102. That is, the viewpoint is set such that a positional relationship between the viewpoint and the foreground object combined with the CG space is identical to a positional relationship between the virtual camera used for rendering by the virtual viewpoint object rendering unit 104 and the foreground object.

As a result of rendering, a texture image of the CG space viewed from the virtual viewpoint and depth information (depth image) indicating a distance from the virtual viewpoint to each background object of the CG space are obtained. Incidentally, the texture image of the CG space viewed from the virtual viewpoint may also be simply referred to as a background image.

FIG. 3B is a diagram showing the texture image of the CG space viewed from the virtual viewpoint (background image). The CG space may include a background object having a three-dimensional shape. In the CG space, a shadow of the background object is rendered based on a CG light, which will be described below.

The CG light information acquisition unit 106 acquires, from the CG information input apparatus 120, information on a light (referred to as a CG light), which is a light source in the CG space generated as a background. The acquired information includes spatial positional information in the CG space such as a position and direction of the CG light and optical information on the CG light. The optical information on the CG light includes, for example, a luminance and color of the light and a ratio of an attenuation to a distance from the CG light. In a case where the CG space includes a plurality of CG lights, information on each of the CG lights is acquired. Incidentally, the type of CG light is not particularly limited.

The foreground mask acquisition unit 105 determines, based on the information on the CG light acquired by the CG light information acquisition unit 106, an image capturing apparatus closest to the position and orientation of the CG light from the image capturing apparatuses constituting the image capturing apparatus 111. The foreground mask acquisition unit 105 then acquires a silhouette image generated by the foreground extraction unit 101 extracting the foreground object from the captured image corresponding to the determined image capturing apparatus.

FIG. 2A shows a relationship among the positions of the image capturing apparatuses 111a to 111g capturing the foreground object 202 and the position of a CG light 201 set in the CG space. The position of the CG light 201 in FIG. 2A indicates a position of the CG light 201 corresponding to the position of the foreground object combined in the CG space. The positions of the image capturing apparatuses 111a to 111g in FIG. 2A are positions derived from the information on the image capturing apparatus output from the image capturing information input apparatus 110, namely positions of the image capturing apparatuses 111a to 111g relative to the foreground object 202 at the time of capturing the foreground object 202. The positions of the image capturing apparatus 111 are thus aligned to correspond to the positions in the CG space. Accordingly, the foreground mask acquisition unit 105 can determine an image capturing apparatus closest to the position and orientation of the CG light from the image capturing apparatuses constituting the image capturing apparatus 111.

As the method of determining an image capturing apparatus close to the CG light, for example, an image capturing apparatus is determined such that a difference between the position of the CG light and the position of the image capturing apparatus is the smallest. Alternatively, an image capturing apparatus is determined such that a difference between the orientation of the CG light and the orientation of the image capturing apparatus is the smallest. Alternatively, an image capturing apparatus may be determined such that differences between the position and orientation of the CG light and the position and orientation of the image capturing apparatus are the smallest.

In the case of FIG. 2A, it is determined that an image capturing apparatus close to the position and orientation of the CG light 201 is the image capturing apparatus 111b. In this case, the foreground mask acquisition unit 105 acquires the silhouette image 203 generated based on the captured image of the image capturing apparatus 111b.

The shadow generation unit 107 generates a texture image of a shadow, which is an image of a shadow of the foreground object placed in the CG space viewed from the virtual viewpoint. The texture image of the shadow generated by the shadow generation unit may also be simply referred to as a shadow image. The shadow generation unit 107 also generates depth information (depth image) indicating a distance from the virtual viewpoint to the shadow. The processing of the shadow generation unit 107 will be described later in detail.

FIG. 3C is a diagram showing the texture image (shadow image) in which the shadow of the foreground object projected to correspond to the CG space is viewed from the virtual viewpoint. Rendering the shadow of the object in line with the CG light in the CG space can make the combined image more realistic.

The combining unit 109 generates a combined image. That is, the combining unit 109 combines the foreground object image generated by the virtual viewpoint object rendering unit 104, the background image generated by the CG space rendering unit 108, and the shadow image generated by the shadow generation unit 107 into a single combined image. The combining unit 109 combines the images based on the depth images generated by the virtual viewpoint object rendering unit 104, the CG space rendering unit 108, and the shadow generation unit 107, respectively. FIG. 3D is a diagram showing a combined image obtained by combining the foreground object image of FIG. 3A, the background image of FIG. 3B, and the shadow image of FIG. 3C into a single image. The method of generating the combined image will be described later in detail.

As described above, in a case where the CG light is set in the CG space and the shadow is rendered in the CG space based on the CG light, the resulting image can be prevented from being unnatural by generating the shadow of the foreground object combined in the CG space to conform to the CG space as shown in FIG. 3D.

[Hardware Configuration]

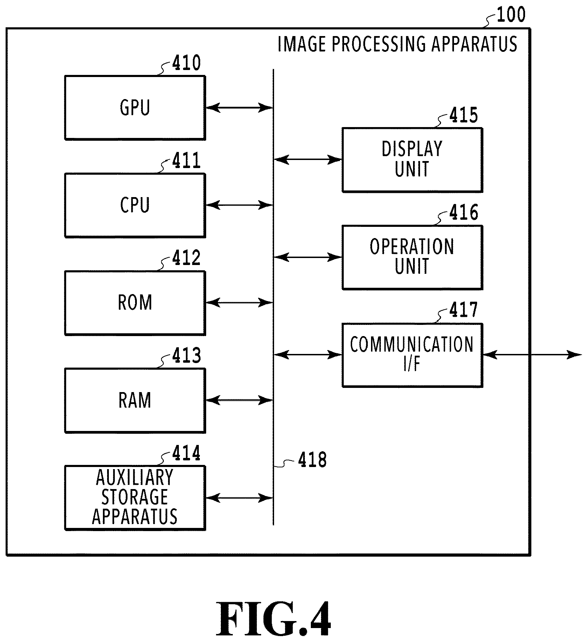

FIG. 4 is a block diagram for illustrating a hardware configuration of the image processing apparatus 100. The image processing apparatus 100 comprises a computation unit including a graphics processing unit (GPU) 410 and a central processing unit (CPU) 411. For example, the computation unit performs image processing and three-dimensional shape generation. The image processing apparatus 100 also comprises a storage unit including a read only memory (ROM) 412, a random access memory (RAM) 413, and an auxiliary storage apparatus 414, a display unit 415, an operation unit 416, a communication I/F 417, and a bus 418.

The CPU 411 controls the entire image processing apparatus 100 using a computer program or data stored in the ROM 412 or RAM 413. The CPU 411 also acts as a display control unit which controls the display unit 415 and an operation control unit which controls the operation unit 416.

The GPU 410 can perform efficient computations by parallel processing of a large amount of data. In the execution of a program, computations may be performed by either one of the CPU 411 and the GPU 410 or through cooperation between the CPU 411 and the GPU 410.

Incidentally, the image processing apparatus 100 may comprise one or more types of dedicated hardware different from the CPU 411 such that at least part of the processing by the CPU 411 is executed by the dedicated hardware. Examples of the dedicated hardware include an application specific integrated circuit (ASIC), a field-programmable gate array (FPGA), and a digital signal processor (DSP).

The ROM 412 stores a program and the like requiring no change. The RAM 413 temporarily stores a program and data supplied from the auxiliary storage apparatus 414, data externally supplied via the communication I/F 417, and the like. The auxiliary storage apparatus 414 is formed by, for example, a hard disk drive, and stores various types of data such as image data and audio data.

For example, the display unit 415 is formed by a liquid crystal display or LED and displays a graphical user interface (GUI) for a user to operate the image processing apparatus 100. The operation unit 416 is formed by, for example, a keyboard, mouse, joystick, or touch panel to accept user operations and input various instructions to the CPU 411.

The communication I/F 417 is used for communication between the image processing apparatus 100 and an external apparatus. For example, in a case where the image processing apparatus 100 is connected to an external apparatus in a wired manner, a communication cable is connected to the communication I/F 617. In a case where the image processing apparatus 100 has the function of wireless communication with an external apparatus, the communication I/F 617 comprises an antenna. The bus 418 connects the units of the image processing apparatus 100 to transfer information.

Each of the functional units of the image processing apparatus 100 in FIG. 1 is implemented by execution of a predetermined program by the CPU 411 of the image processing apparatus 100, but is not limited to this. For example, hardware such as the GPU 410 or an unshown FPGA may be used. Each of the functional units may be implemented through cooperation between software and hardware such as a dedicated IC, or part or all of the functions may be implemented only by hardware. For example, in the image processing apparatus 100, the GPU 410 is used in addition to the CPU 411 for the processing by the foreground extraction unit 101, the three-dimensional shape estimation unit 103, the virtual viewpoint object rendering unit 104, the CG space rendering unit 108, the shadow generation unit 107, and the combining unit 109.

[Method of Shadow Generation]

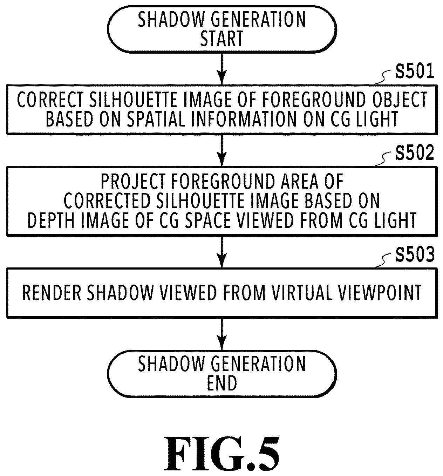

FIG. 5 is a flowchart illustrating the procedure of shadow generation processing according to the present embodiment. The procedure shown in the flowchart of FIG. 5 is performed by at least one of the CPU and GPU of the image processing apparatus 100 loading a program code stored in the ROM into the RAM and executing the program code. Part or all of the functions of the steps in FIG. 5 may be implemented by hardware such as an ASIC or electronic circuit. Incidentally, sign "S" in the description of each process means a step in the flowchart; the same applies to the subsequent flowcharts.

In S501, the shadow generation unit 107 corrects the silhouette image of the image capturing apparatus specified by the foreground mask acquisition unit 105 to a silhouette image of the foreground object viewed from the position of the CG light.

For example, the correction is made by regarding the CG light as a virtual camera and converting the silhouette image specified by the foreground mask acquisition unit 105 into a silhouette image viewed from the CG light based on viewpoint information on that virtual camera and viewpoint information on the image capturing apparatus specified by the foreground mask acquisition unit 105. The conversion is made according to Formula (1):

$$I' = P^{-1}IP' \qquad \text{Formula (1)}$$

In Formula (1), I and I' are matrices where each element indicates a pixel value. I is a matrix indicating pixel values of the whole of the silhouette image of the image capturing apparatus specified by the foreground mask acquisition unit 105. I' is a matrix indicating pixel values of the whole of the corrected silhouette image. $P^{-1}$ is an inverse matrix of viewpoint information P on the image capturing apparatus specified by the foreground mask acquisition unit 105. P' is a matrix indicating viewpoint information on the virtual camera on the assumption that the position of the CG light is a position of the virtual camera and the orientation of the CG light is an orientation of the virtual camera.

For example, it is assumed that the foreground mask acquisition unit 105 specifies the silhouette image 203 of FIG. 2B as the silhouette image of the image capturing apparatus 111b closest to the CG light 201. In this case, the silhouette image 203 is converted into a silhouette image 204 viewed from the position and orientation of the CG light 201.

In S502, the shadow generation unit 107 uses a foreground area of the corrected silhouette image 204 obtained in S501 as a shadow area and projects the shadow area to a projection plane of the CG space.

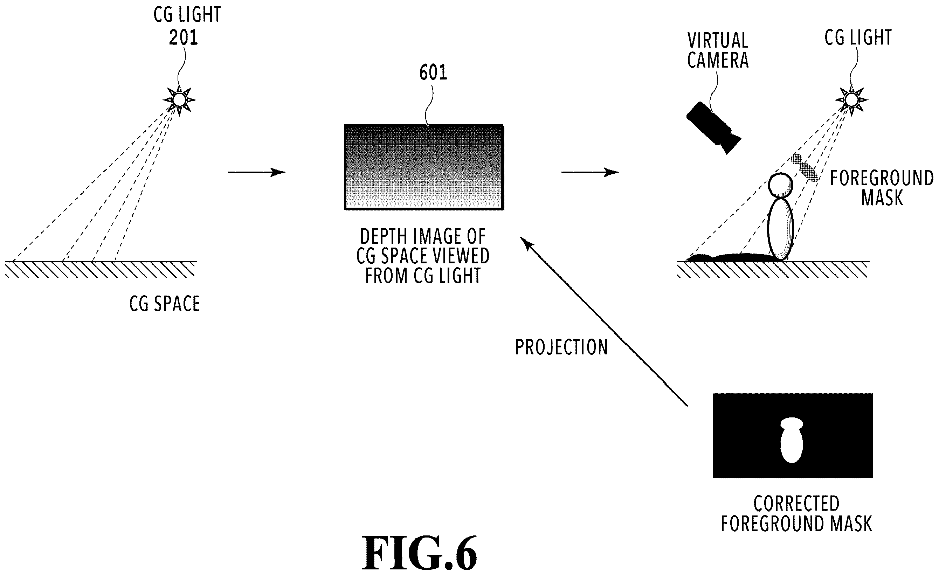

FIG. 6 is a schematic diagram for illustrating the shadow generation processing. The shadow generation unit 107 acquires a depth image 601 of the CG space viewed from the virtual camera on the assumption that the position of the CG light 201 is a position of the virtual camera and the orientation of the CG light 201 is an orientation of the virtual camera. The shadow generation unit 107 then calculates a projection plane based on the depth image 601. As the method of shadow projection, the projective texture mapping method is used, or the shadow volume method or shadow mapping method may be used. In a case where there are a plurality of CG lights, shadows are projected by the respective lights and then all the shadows are integrated.

The shadow generation unit 107 calculates a luminance of the projected shadow based on a luminance of the CG light and a luminance of an environmental light according to Formula (2):

$$L = L_e + \Sigma S_i L_i \qquad \text{Formula (2)}$$

L is the luminance of the shadow on the projection plane. $L_e$ is the luminance of the environmental light. $S_i$ is a value indicating whether an area after projection is a shadow; it takes on 0 if an area after projection by the CG light i is a shadow and takes on 1 if the area is not a shadow. $L_i$ is the luminance of irradiation with the CG light i.

In S503, the shadow generation unit 107 renders the shadow projected on the projection plane in S502 to obtain an image viewed from the virtual viewpoint set by the virtual viewpoint generation unit 102. As a result of rendering, a texture image of the shadow (shadow image) viewed from the virtual viewpoint and depth information (depth image) indicating a distance from the virtual viewpoint to the shadow are obtained. In the generated depth image, a pixel value of an area with no shadow is 0 and a pixel value of an area with the shadow is a depth value of the projection plane.

The rendering method may be identical to the method of rendering a view from the virtual viewpoint in the virtual viewpoint object rendering unit 104 and the CG space rendering unit 108. Alternatively, for example, the shadow generation unit 107 may perform rendering by a method simpler than the rendering method used by the CG space rendering unit 108.

[Combining]

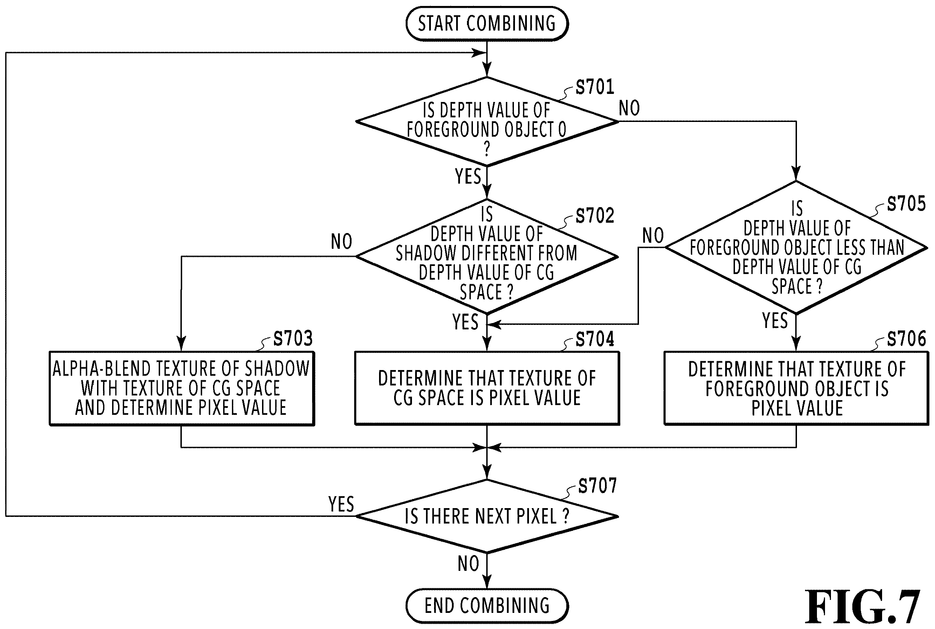

FIG. 7 is a flowchart illustrating the procedure of combining processing for generating a combined image according to the present embodiment.

The processing from S701 to S706 described below is the processing of determining a pixel value of one pixel of interest in a combined image. In the following processing, a texture image of a shadow and a depth image of the shadow are the texture image and depth image of the shadow viewed from the virtual viewpoint generated in S503 of the flowchart of FIG. 5. A texture image and depth image of a CG space are the texture image and depth image of the CG space viewed from the virtual viewpoint. A texture image and depth image of a foreground object is the texture image and depth image of the foreground object viewed from the virtual viewpoint. The virtual viewpoint here is a virtual viewpoint set by the virtual viewpoint generation unit 102 or a viewpoint corresponding to that virtual viewpoint. Incidentally, a pixel of interest in each image indicates a pixel corresponding to a pixel of interest in a combined image.

In S701, the combining unit 109 determines whether a depth value of the pixel of interest in the depth image of the foreground object is 0. In this step, it is determined whether the pixel of interest is an area other than the area of the foreground object.

If the depth value is 0 (YES in S701), the processing proceeds to S702. The combining unit 109 determines in S702 whether a depth value of the pixel of interest in the depth image of the shadow is different from a depth value of the pixel of interest in the depth image of the CG space.

If the depth value of the shadow is equal to the depth value of the CG space (NO in S702), the pixel of interest in the combined image is a pixel forming an area of the shadow of the foreground object. Thus, the processing proceeds to S703 to determine a pixel value of the pixel indicating the shadow of the foreground object in the combined image.

In S703, the combining unit 109 alpha-blends a pixel value of the pixel of interest in the texture image of the shadow with a pixel value of the pixel of interest in the texture image of the CG space and determines a pixel value of the pixel of interest in the combined image. The alpha value is obtained from a ratio between the luminance of the shadow image and the luminance of the CG image at the pixel of interest.

On the other hand, if the depth value of the shadow is different from the depth value of the CG space (YES in S702), the processing proceeds to S704. If the depth value of the shadow is different from the depth value of the CG space, the pixel of interest is a pixel of an area with no shadow or foreground object. Thus, the combining unit 109 determines in S704 that a pixel value of the pixel of interest in the texture image of the CG space is used as a pixel value of the pixel of interest in the combined image.

On the other hand, if the depth value of the pixel of interest in the depth image of the foreground object is not 0 (NO in S701), the processing proceeds to S705. The combining unit 109 determines in S705 whether the depth value of the pixel of interest in the depth image of the foreground object is less than the depth value of the pixel of interest in the depth image of the CG space.

If the depth value of the foreground object is less than the depth value of the CG space (YES in S705), the processing proceeds to S706. In this case, the foreground object viewed from the virtual viewpoint is in front of the background object in the CG space. Accordingly, the pixel of interest in the combined image is a pixel of an area in which the foreground object is present. Thus, the combining unit 109 determines that the pixel value of the pixel of interest in the texture image of the foreground object is used as a pixel value of the pixel of interest in the combined image.

If the depth value of the foreground object is equal to or greater than the depth value of the CG space (NO in S705), the background object of the CG space is in front of the foreground object. Thus, the combining unit 109 determines in S704 that the pixel value of the pixel of interest in the texture image of the CG space is used as a pixel value of the pixel of interest in the combined image. Alternatively, a translucent background object may be interposed between the foreground object and the virtual viewpoint. In this case, a pixel value of the pixel of interest in the combined image is determined by alpha-blending the pixel value of the pixel of interest in the texture image of the foreground object with the pixel value of the pixel of interest in the texture image of the CG space according to the transparency of the background object.

As described above, according to the present embodiment, the shadow of the foreground object corresponding to the CG light is generated using the silhouette image, which is two-dimensional information on the foreground object. The use of the two-dimensional information can reduce the amount of usage of computation resources as compared with shadow generation using three-dimensional information such as a polygon mesh. Therefore, even in a case where the processing time is limited, such as the case of real-time shadow generation in image capturing, a realistic shadow corresponding to the CG light can be generated.

Incidentally, the above description of the present embodiment is based on the assumption that a captured image as an input image is a still image. However, the input image of the present embodiment may be a moving image. In a case where the input image is a moving image, for example, the image processing apparatus 100 may perform processing for each frame according to time information such as a timecode of the moving image.

<Second Embodiment>

In the first embodiment, the description has been given of the method of generating a shadow based on a silhouette image of a foreground object as two-dimensional information on the foreground object. However, in a case where a foreground object is shielded by an object other than the foreground object in a captured space such as a studio, a foreground area of a silhouette image sometimes does not appropriately indicate the shape of the foreground object. In this case, there is a possibility that the shape of the shadow of the foreground object cannot be appropriately reproduced. The present embodiment will describe the method of using a depth image of a foreground object as two-dimensional information on the foreground object. The description will be mainly given of differences between the present embodiment and the first embodiment; portions not particularly described have the same configurations or processes as those in the first embodiment.

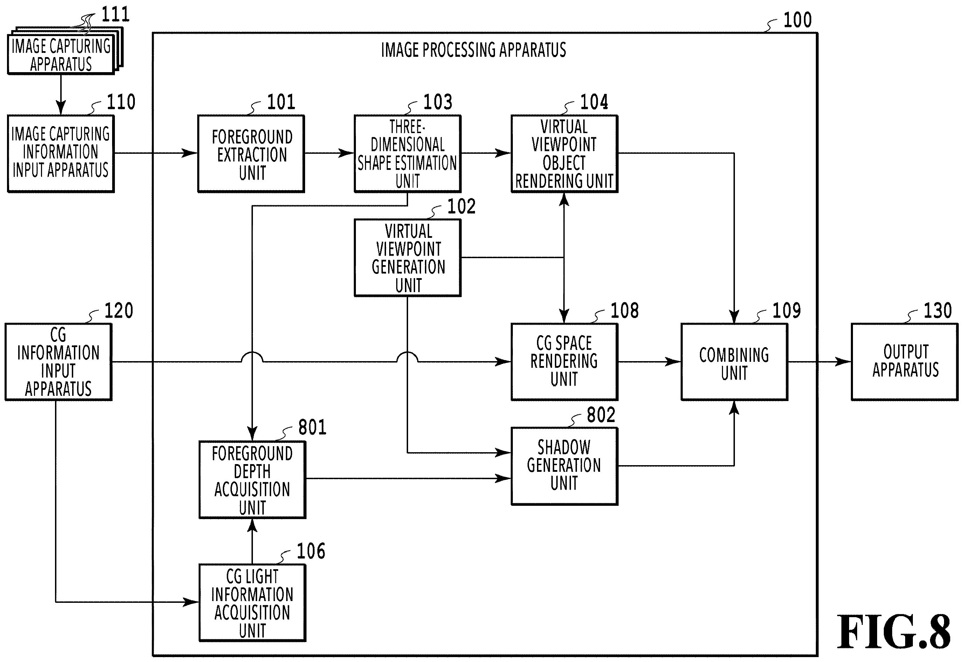

FIG. 8 is a functional configuration diagram of the image processing apparatus 100 in the present embodiment. The same constituents are described with the same reference signs. The present embodiment is different from the first embodiment in that a foreground depth acquisition unit 801 is provided and the shadow generation unit 802 has a different function. The foreground depth acquisition unit 801 and the function of the shadow generation unit 802 will be described in detail together with a flowchart.

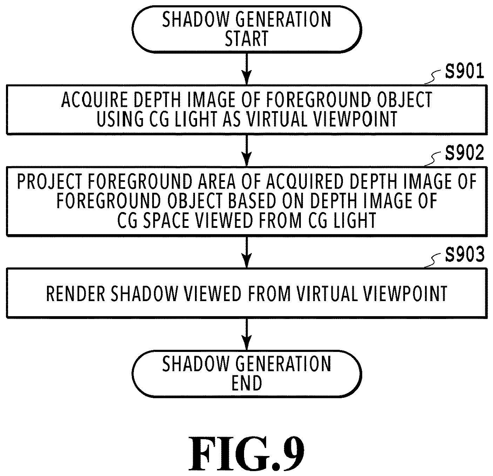

FIG. 9 is a flowchart illustrating the procedure of shadow generation processing according to the present embodiment. The processing of shadow generation according to the present embodiment will be described with reference to FIG. 9.

In S901, the foreground depth acquisition unit 801 generates a depth image of the foreground object viewed from the CG light and the shadow generation unit 802 acquires the depth image.

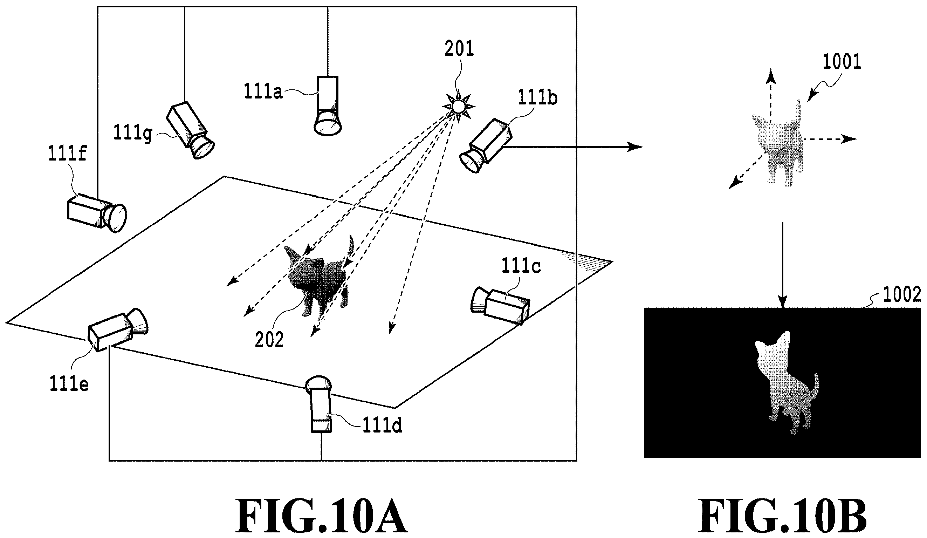

FIGS. 10Aand 10B are diagrams for explaining the depth image acquired in S901. FIG. 10A is a diagram similar to FIG. 2A and shows the positions of the image capturing apparatuses 111a to 111g and CG light 201 aligned with the foreground object. Silhouette images obtained from captured images by the image capturing apparatuses 111a to 111g capturing the foreground object 202 are used to estimate a three-dimensional shape 1001 of the foreground object 202 shown in FIG. 10B and generate a three-dimensional model. The three-dimensional shape 1001 is intermediate information used for rendering by the virtual viewpoint object rendering unit 104.

The foreground depth acquisition unit 801 then generates a depth image 1002 of the three-dimensional shape 1001 of the foreground object viewed from a virtual camera on the assumption that the position of the CG light 201 is a position of the virtual camera and the orientation of the CG light 201 is an orientation of the virtual camera. In the generated depth image 1002, a pixel value of an area in which the foreground object 202 is present (the gray area of the depth image 1002) is a depth value indicating a distance between the foreground object 202 and the CG light 201. A pixel value of an area with no foreground object (the black area of the depth image 1002) is 0. In this manner, the depth image of the foreground object is acquired based on the position and orientation of the CG light 201 obtained by the CG light information acquisition unit 106.

In S902, the shadow generation unit 802 uses the area of the foreground object 202 in the depth image 1002 acquired in S901 (the gray area other than the black area in the depth image 1002) as a shadow area and projects the shadow area to a projection plane. Since the method of projecting the shadow and the method of calculating the luminance of the shadow are the same as those in S502, the description thereof is omitted.

In S903, the shadow generation unit 802 renders the shadow projected to the projection plane in S902 to obtain an image viewed from the virtual viewpoint set by the virtual viewpoint generation unit 102. Since the rendering method is the same as that in S503, the description thereof is omitted.

As described above, in the present embodiment, an image indicating the shadow is generated based on the depth image, which is two-dimensional information on the foreground object. Since the area of the foreground object is not shielded by any other object in the depth image, the shape of the foreground object can be reproduced with more fidelity. Therefore, the shape of the shadow of the foreground object can be appropriately generated.

<Third Embodiment>

The present embodiment will describe the method of generating a shadow using posture information on a foreground object. The description will be mainly given of differences between the present embodiment and the first embodiment; portions not particularly described have the same configurations or processes as those in the first embodiment.

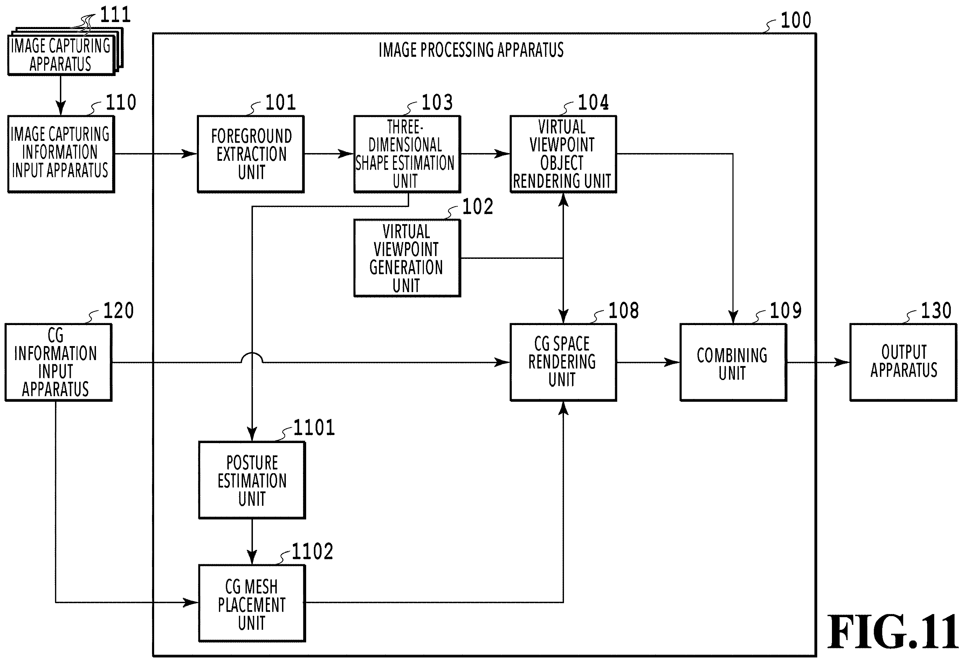

FIG. 11 is a functional configuration diagram of the image processing apparatus 100 according to the present embodiment. The same constituents as those of the first embodiment are described with the same reference signs. The present embodiment is different from the first embodiment in that a posture estimation unit 1101 and a CG mesh placement unit 1102 are provided as functional units to generate a shadow of a foreground object corresponding to a CG space. The following description is based on the assumption that the foreground object in the present embodiment is a human figure.

The posture estimation unit 1101 estimates a posture of a foreground object using a three-dimensional model of the foreground object generated by the three-dimensional shape estimation unit 103 and generates posture information that is information indicating the estimated posture.

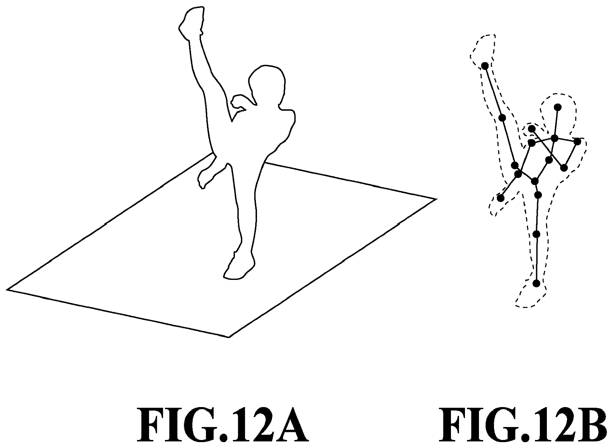

FIGS. 12A and 12B are diagrams for illustrating the posture information. The posture estimation unit 1101 estimates a posture by generating a skeleton model as shown in FIG. 12B for a foreground object shown in FIG. 12A. The method of generating the skeleton model may be any existing method.

The CG mesh placement unit 1102 places a mesh having the same posture as the foreground object at a position where the foreground object is combined in the CG space.

For example, the mesh having the same posture as the foreground object is placed by the method described below. The CG mesh placement unit 1102 prepares in advance a mesh having a shape identical or similar to the shape of the foreground obj ect. The mesh is made adaptable to a posture (skeleton) estimated by the posture estimation unit 1101. Since the foreground object in the present embodiment is a human figure, for example, a mesh of a human figure model like a mannequin is prepared. The CG mesh placement unit 1102 sets a skeleton to the prepared mesh.

After that, the CG mesh placement unit 1102 adapts the posture (skeleton) estimated by the posture estimation unit 1101 to the mesh. Finally, the CG mesh placement unit 1102 acquires three-dimensional positional information indicating a position in the CG space where the foreground object is combined and places the mesh in the CG space based on the three-dimensional positional information. The mesh of the human figure model having the same posture as the foreground object is thus placed at the same position as the position where the foreground object is combined in the CG space. At the time of adapting the posture (skeleton) estimated by the posture estimation unit 1101 to the mesh, the scale of the prepared mesh may be adjusted according to the posture (skeleton).

The CG space rendering unit 108 performs rendering based on the information obtained from the CG information input apparatus 120 to obtain an image of the CG space viewed from the virtual viewpoint. At the time of rendering, a shadow of the mesh of the human figure model placed by the CG mesh placement unit 1102 is rendered, whereas the mesh of the human figure model per se is not rendered. As a result, an image of the CG space viewed from the virtual viewpoint is generated, where the shadows of the objects corresponding to the background and foreground objects in the CG space are rendered. The images of the CG space resulting from rendering are a texture image and depth image of the CG space viewed from the virtual viewpoint.

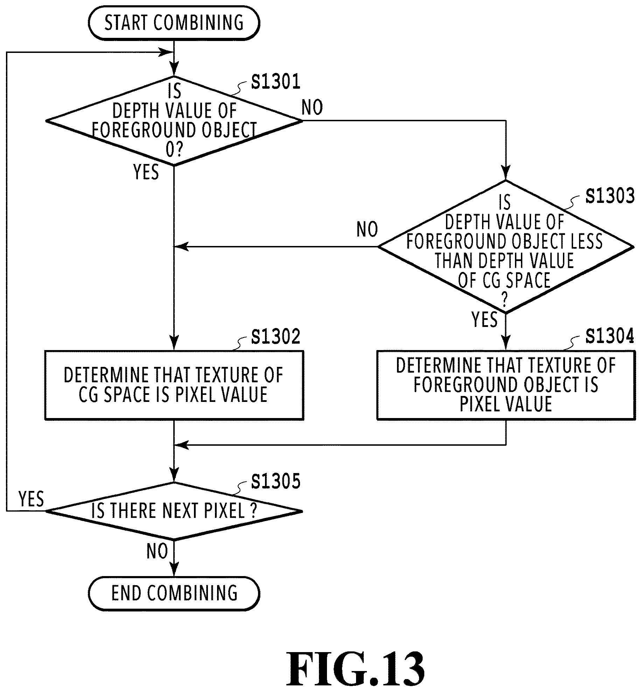

FIG. 13 is a flowchart illustrating the procedure of combining processing according to the present embodiment. The processing from S1301 to S1304 described below is the processing of determining a pixel value of one pixel of interest in a combined image. In the following processing, a texture image and depth image of the foreground object are the texture image and depth image of the foreground object viewed from the virtual viewpoint. A texture image and depth image of the CG space are the texture image and depth image of the CG space viewed from the virtual viewpoint. In the present embodiment, a texture image in which a shadow image corresponding to the foreground object is rendered is used as the texture image of the CG space viewed from the virtual viewpoint.

In S1301, the combining unit 109 determines whether a depth value of a pixel of interest in the depth image of the foreground object is 0.

If the depth value is 0 (YES in S1301), the processing proceeds to S1302. If the depth value is 0, the pixel of interest is a pixel of an area with no foreground object. Thus, the combining unit 109 determines in S1302 that the pixel value of the pixel of interest in the texture image of the CG space is used as a pixel value of the pixel of interest in the combined image.

On the other hand, if the depth value of the pixel of interest in the depth image of the foreground object is not 0 (NO in S1301), the processing proceeds to S1303. The combining unit 109 determines in S1303 whether the depth value of the pixel of interest in the depth image of the foreground object is less than a depth value of the pixel of interest in the depth image of the CG space.

If the depth value of the foreground object is less than the depth value of the CG space (YES in S1305), the processing proceeds to S1304. In this case, the foreground object viewed from the virtual viewpoint is in front of the background object in the CG space. Thus, the combining unit 109 determines that the pixel value of the pixel of interest in the texture image of the foreground object is used as a pixel value of the pixel of interest in the combined image.

If the depth value of the foreground object is equal to or greater than the depth value of the CG space (NO in S1305), the background object of the CG space is in front of the foreground object. Accordingly, the combining unit 109 determines in S1302 that the pixel value of the pixel of interest in the texture image of the CG space is used as a pixel value of the pixel of interest in the combined image.

In the above manner, differently from the preceding embodiments, the combining unit 109 only has to combine the image of the foreground object viewed from the virtual viewpoint with the image of the CG space viewed from the virtual viewpoint in order to generate a combined image.

As described above, according to the present embodiment, the shadow corresponding to the foreground object in the CG space can be appropriately rendered. Further, in the present embodiment, the CG space rendering unit 108 renders the mesh concurrently with the other CG objects, thereby rendering the influence of effects in the CG space such as reflection and bloom. Thus, according to the present embodiment, a natural shadow is generated in the CG space in conformity with the background object of the CG space, whereby a more realistic shadow can be generated. Further, although it is considered that a shadow is rendered by directly placing a three-dimensional model of a foreground object, data to be transferred for rendering in this case is the three-dimensional model. In contrast, in the present embodiment, data to be transferred for rendering is posture information. Therefore, the size of data to be transferred can be reduced.

According to the present disclosure, the shadow of the foreground object combined in the CG space can be generated while reducing the amount of data and the amount of computation.

<Other Embodiments>

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present disclosure has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.

An image processing apparatus(100) has one or more memories(412,414) storing instructions; and one or more processors(411) executing the instructions to: acquire a foreground object image, the foreground object image being an image viewing a foreground object from a virtual viewpoint and including no background(104); acquire a background image rendered using computer graphics, the background image being an image viewing a CG space from the virtual viewpoint and including background(108); generate a shadow image indicating a shadow of the foreground object corresponding to the CG space(107); and generate a combined image by combining the foreground object image, the background image, and the shadow image into a single image(109), wherein the shadow image is generated based on two-dimensional information on a shape of the foreground object and information on a light in the CG space(S501-S503).

**Claims**

1. An image processing apparatus(100) comprising:

    one or more memories(412,414) storing instructions; and
    one or more processors(411) executing the instructions to:

      acquire a foreground object image, the foreground object image being an image viewing a foreground object from a virtual viewpoint and including no background(104);
      acquire a background image rendered using computer graphics, the background image being an image viewing a CG space from the virtual viewpoint and including background(108);
      generate a shadow image indicating a shadow of the foreground object corresponding to the CG space(107); and
      generate a combined image by combining the foreground object image, the background image, and the shadow image into a single image(109),
      wherein the shadow image is generated based on two-dimensional information on a shape of the foreground object and information on a light in the CG space(S501-S503).

2. The image processing apparatus according to claim 1, wherein
    the two-dimensional information is a silhouette image indicating an area of the foreground object.

3. The image processing apparatus according to claim 2, wherein

    the foreground object image is an image generated based on a plurality of captured images obtained by a plurality of image capturing apparatuses capturing the foreground object, and
    the shadow image is generated based on the silhouette image generated based on a captured image of an image capturing apparatus determined from the plurality of image capturing apparatuses and the information on the light.

4. The image processing apparatus according to claim 3, wherein
    the image capturing apparatus determined from the plurality of image capturing apparatuses is an image capturing apparatus at a position closest to a position of the light in a case where positions of the plurality of image capturing apparatuses are aligned with positions corresponding to the CG space.

5. The image processing apparatus according to claim 3, wherein

    the silhouette image corresponding to the image capturing apparatus determined from the plurality of image capturing apparatuses is corrected to an image indicating an area of the foreground object viewed from a position of the light, and
    the shadow image is generated based on a silhouette image obtained as a result of the correction and the information on the light.

6. The image processing apparatus according to claim 5, wherein
    the silhouette image corresponding to the image capturing apparatus determined from the plurality of image capturing apparatuses is corrected based on the information on the light and information on the image capturing apparatus determined from the plurality of image capturing apparatuses.

7. The image processing apparatus according to claim 2, wherein
    the shadow image is generated using an area of the foreground object in the silhouette image as a shadow area.

8. The image processing apparatus according to claim 7, wherein
    the shadow image is generated by projecting the shadow area to a projection plane corresponding to the CG space and performing rendering to obtain an image viewed from the virtual viewpoint.

9. The image processing apparatus according to claim 1, wherein
    the two-dimensional information is a depth image of the foreground object indicating a distance between the light and the foreground object.

10. The image processing apparatus according to claim 9, wherein
    the shadow image is generated using an area of the foreground object in the depth image of the foreground object as a shadow area.

11. The image processing apparatus according to claim 10, wherein
    the shadow image is generated by projecting the shadow area to a projection plane corresponding to the CG space and performing rendering to obtain an image viewed from the virtual viewpoint.

12. The image processing apparatus according to claim 1, wherein
    the combined image is generated using depth images corresponding to the foreground object image, the background image, and the shadow image, respectively.

**13.** The image processing apparatus according to claim 12, wherein
by comparing depth values of a pixel of interest of the respective depth images, a pixel value of the pixel of interest in the combined image is determined from the foreground object image, the background image, and the shadow image.

**14.** An image processing method comprising:

acquiring a foreground object image, the foreground object image being an image viewing a foreground object from a virtual viewpoint and including no background;
acquiring a background image rendered using computer graphics, the background image being an image viewing a CG space from the virtual viewpoint and including background;
generating a shadow image indicating a shadow of the foreground object corresponding to the CG space; and
generating a combined image by combining the foreground object image, the background image, and the shadow image into a single image, wherein the shadow image is generated based on two-dimensional information on a shape of the foreground object and information on a light in the CG space.

**15.** A program for causing a computer to execute the instructions of the image processing apparatus according to any one of claims 1 to 13.

FIG.1

IMAGE PROCESSING APPARATUS 100

111 IMAGE CAPTURING APPARATUS

110 IMAGE CAPTURING INFORMATION INPUT APPARATUS

101 FOREGROUND EXTRACTION UNIT

103 THREE-DIMENSIONAL SHAPE ESTIMATION UNIT

102 VIRTUAL VIEWPOINT GENERATION UNIT

104 VIRTUAL VIEWPOINT OBJECT RENDERING UNIT

108 CG SPACE RENDERING UNIT

107 SHADOW GENERATION UNIT

109 COMBINING UNIT

130 OUTPUT APPARATUS

105 FOREGROUND MASK ACQUISITION UNIT

106 CG LIGHT INFORMATION ACQUISITION UNIT

120 CG INFORMATION INPUT APPARATUS

**FIG.2A**

**FIG.2B**

FIG.3A

FIG.3B

FIG.3C

FIG.3D

FIG.3E

**FIG.4**

SHADOW GENERATION
START

S501

CORRECT SILHOUETTE IMAGE OF FOREGROUND OBJECT
BASED ON SPATIAL INFORMATION ON CG LIGHT

S502

PROJECT FOREGROUND AREA OF
CORRECTED SILHOUETTE IMAGE BASED ON
DEPTH IMAGE OF CG SPACE VIEWED FROM CG LIGHT

S503

RENDER SHADOW VIEWED FROM VIRTUAL VIEWPOINT

SHADOW GENERATION
END

# FIG.5

CG LIGHT 201

CG SPACE

601

DEPTH IMAGE OF
CG SPACE VIEWED
FROM CG LIGHT

PROJECTION

VIRTUAL
CAMERA

CG LIGHT

FOREGROUND
MASK

CORRECTED
FOREGROUND MASK

**FIG.6**

START COMBINING

S701 — IS DEPTH VALUE OF FOREGROUND OBJECT 0 ?

NO → S705 — IS DEPTH VALUE OF FOREGROUND OBJECT LESS THAN DEPTH VALUE OF CG SPACE ?

YES → S702 — IS DEPTH VALUE OF SHADOW DIFFERENT FROM DEPTH VALUE OF CG SPACE ?

S702 NO → S703 — ALPHA-BLEND TEXTURE OF SHADOW WITH TEXTURE OF CG SPACE AND DETERMINE PIXEL VALUE

S702 YES → S704 — DETERMINE THAT TEXTURE OF CG SPACE IS PIXEL VALUE

S705 NO → S704

S705 YES → S706 — DETERMINE THAT TEXTURE OF FOREGROUND OBJECT IS PIXEL VALUE

S707 — IS THERE NEXT PIXEL ?

YES → (return to S701)

NO → END COMBINING

**FIG.7**

**FIG.8**

EP 4 258 221 A2

SHADOW GENERATION
START

S901

ACQUIRE DEPTH IMAGE OF FOREGROUND OBJECT
USING CG LIGHT AS VIRTUAL VIEWPOINT

S902

PROJECT FOREGROUND AREA OF ACQUIRED DEPTH IMAGE OF
FOREGROUND OBJECT BASED ON DEPTH IMAGE OF
CG SPACE VIEWED FROM CG LIGHT

S903

RENDER SHADOW VIEWED FROM VIRTUAL VIEWPOINT

SHADOW GENERATION
END

# FIG.9

**FIG.10A**

**FIG.10B**

FIG.11

EP 4 258 221 A2

# FIG.12A          FIG.12B

START COMBINING

S1301
IS DEPTH VALUE OF FOREGROUND OBJECT 0? — NO

YES

S1303
IS DEPTH VALUE OF FOREGROUND OBJECT LESS THAN DEPTH VALUE OF CG SPACE ? — NO

YES

S1302
DETERMINE THAT TEXTURE OF CG SPACE IS PIXEL VALUE

S1304
DETERMINE THAT TEXTURE OF FOREGROUND OBJECT IS PIXEL VALUE

S1305
IS THERE NEXT PIXEL ? — YES

NO

END COMBINING

## FIG.13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019031259 A